(19) Europäisches Patentamt
European Patent Office
Office européen des brevets

(11) **EP 3 794 910 B1**

(12) **EUROPEAN PATENT SPECIFICATION**

(45) Date of publication and mention of the grant of the patent:
**15.06.2022 Bulletin 2022/24**

(21) Application number: **19730215.1**

(22) Date of filing: **06.05.2019**

(51) International Patent Classification (IPC):
**G01J 1/42** (2006.01)    **G01J 1/02** (2006.01)
**H05B 47/11** (2020.01)    **H05B 47/125** (2020.01)

(52) Cooperative Patent Classification (CPC):
**G01J 1/0228; G01J 1/0266; G01J 1/4204; H05B 47/11; H05B 47/125;** G01J 2001/4247; Y02B 20/40

(86) International application number:
**PCT/IB2019/053669**

(87) International publication number:
**WO 2019/220256 (21.11.2019 Gazette 2019/47)**

(54) **A METHOD OF MEASURING ILLUMINATION, CORRESPONDING SYSTEM, COMPUTER PROGRAM PRODUCT AND USE**

VERFAHREN ZUR MESSUNG DER BELEUCHTUNGSSTÄRKE, ZUGEHÖRIGES SYSTEM, COMPUTERPROGRAMMPRODUKT UND VERWENDUNG

PROCÉDÉ DE MESURE D'ÉCLAIRAGE, SYSTÈME CORRESPONDANT, PRODUIT-PROGRAMME INFORMATIQUE ET UTILISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.05.2018 IT 201800005381**

(43) Date of publication of application:
**24.03.2021 Bulletin 2021/12**

(73) Proprietors:
- **OSRAM GmbH**
  **80807 München (DE)**
- **Fondazione Istituto Italiano di Tecnologia**
  **16163 Genova (IT)**
- **Università Degli Studi Di Verona**
  **37129 Verona (IT)**

(72) Inventors:
- **TSESMELIS, Theodore**
  **81100 Loutra-Mytilene (GR)**
- **HASAN, Irtiza**
  **Gujranwala, 52250 (PK)**
- **GALASSO, Fabio**
  **00128 Roma (IT)**
- **KAESTLE, Herbert**
  **83278 Traunstein (DE)**
- **DEL BUE, Alessio**
  **16163 Genova (IT)**
- **CRISTANI, Marco**
  **37129 Verona (IT)**

(74) Representative: **Bosotti, Luciano**
**Buzzi, Notaro & Antonielli d'Oulx S.p.A.**
**Corso Vittorio Emanuele II, 6**
**10123 Torino (IT)**

(56) References cited:
**WO-A1-2016/112430      WO-A1-2018/069827**

- **DANIEL MAURER ET AL: "Combining Shape from Shading and Stereo: A Joint Variational Method for Estimating Depth, Illumination and Albedo", INTERNATIONAL JOURNAL OF COMPUTER VISION., vol. 126, no. 12, 27 March 2018 (2018-03-27), pages 1342-1366, XP055552217, US ISSN: 0920-5691, DOI: 10.1007/s11263-018-1079-1**

EP 3 794 910 B1

**Description**

Technical field

The description relates to lighting techniques.

One or more embodiments may be applied to "smart" lighting systems for lighting e.g. an indoor environment by measuring the illumination thereof.

Throughout this description, various documents will be referred to by reproducing between square parentheses (e.g. [X]) a number identifying the document in a LIST OF DOCUMENTS CITED which appears at the end of the description.

Technological background

Evaluating and measuring the spatial illumination changes of luminous indoor environments may play a significant role in lighting practice. The spatial illuminance distribution on surfaces of objects and light-emitting surfaces is oftentimes non-uniform. The non-uniformity level may vary dramatically from one surface to another and even from one sub-area to another sub-area of a same surface. A non uniform illumination of surfaces may be the source of discomfort to observers, insofar as this may militate against proper eye adaption.

Therefore, being able to measure and evaluate a non-uniform illuminance distribution and its changes over space and time is a desirable goal to pursue. For lightplanners, this may involve the capability of modeling the illumination distribution of a scene by simulating the luminous flux which derives both from installed light sources and from the cumulative light emittance of surface elements across the scene.

Uncomplicated methods for measuring luminous illuminance across a scene, e.g. in order to verify the results achieved by means of a certain lighting arrangement are thus desirable.

Current methods for measuring and evaluating spatial and temporal illuminance/luminance (light intensity level) over space and time may include, e.g.:

- direct measurement with conventional luxmeters,
- camera-based measurements determining the luminance and the emittance of a scene,
- using certain conventional S/W-based light-planning tools as Dialux, Relux and others, as discussed in the following.

Direct measurement (e.g. point-wise measurement with conventional luxmeters across the scene) may suffer from low spatial resolution in limited areas with direct access.

This is particular inconvenient and expensive in large architectural spaces with varying daylight illumination over time.

The output from a camera (image pixels) may be calibrated by referring to a certain, known light source. Each pixel value in a known range can be mapped onto a corresponding light intensity value which may then be used for deriving a spatial emittance of a Lambertian scene surface.

Based on the knowledge of a corresponding albedo map (reflectivity), the prevailing input illumination intensity $E$ [lm/m$^2$] - also denoted as the input-illuminance for an elementary surface - can be derived directly from the camera pixel response as:

$$R = L_{pixel} * \pi$$

namely, by considering the lambertian albedo value

$$E = L_{pixel} * \left(\frac{1}{\rho}\right) * \pi$$

where:

$R$ = exit intensity (emittance, exitance) of a surface element;

$E$ = input illumination intensity (input illuminance, input flux density) on a surface element in the scene;

$L_{pixel}$ = measured visible luminous flux of the observed surface element in the scene (calibration of the camera response is assumed);

$\rho$ = Lambertian albedo coefficient of the surface element in the scene (albedo map = diffuse map).

Albedo denotes the reflecting power of a body, expressed as a ratio of reflected light to the total amount falling on the surface.

When using conventional S/W-based light-planning tools as Dialux [1], Relux [2] and others, the spatial illumination intensity across the scene surface can be determined by considering the mutual inter-illumination of the surface elements.

Certain parameters, such as the albedo values of the surface of the scene, can be obtained as experimental values (e.g. table values from data libraries).

The table-based reflectivity values of the scene surface can thus be considered as an ad-hoc assumption for describing the scene.

Also, the geometry and positioning of the light sources as well as the lighting intensity of the scene can be considered to be known.

Document "Combining Shape from Shading and Stereo: A Joint Variational Method for Estimating Depth, Illumination and Albedo" by D. Maurer et al. discloses a computer graphics method for combining shapes (obtained from shadow information) and stereoscopic vision to estimate depth, illumination and albedo data.

Document WO 2016/112430 A1 discloses a method for determining attributes of an image by means of hyperspectral imaging techniques. In particular, it relates to the use of hyperspectral imaging to analyze geographic features in an image, e.g., to identify different minerals in an aerial image of a mining site.

Object and summary

An object of one or more embodiments is to contribute in providing further improvements in the area of technology discussed in the foregoing by overcoming various drawbacks of the solutions discussed in the foregoing.

According to one or more embodiments, such an object may be achieved by means of a method according to claim 1.

One or more embodiments may relate to a corresponding system as defined by claim 7.

One or more embodiments may relate to a computer program product as defined by claim 8.

Favourable modifications are set out in the respective dependent claims.

As used herein, reference to such a computer program product is understood as being equivalent to reference to a computer-readable means containing instructions for controlling the processing system in order to co-ordinate implementation of the method according to one or more embodiments.

Reference to "at least one computer" is intended to highlight the possibility for one or more embodiments to be implemented in modular and/or distributed form.

One or more embodiments may relate to possible use of a method as disclosed herein.

The claims are an integral part of the disclosure provided herein in relation to the one or more embodiments.

One or more embodiments can provide a cheap, convenient and effective (e.g., camera-based) method for determining albedo values (albedo map) across a scene.

For instance, the albedo values p can be retrieved if the luminaire-based illumination is known. Otherwise, if the albedo values p are known, the luminaire-based illumination can be retrieved.

One or more embodiments can provide geometrical form factors which may be used for conventional light simulation tools such as those based, e.g., on ray tracing and/or radiosity.

One or more embodiments facilitate measuring the resulting illumination values across the scene for verification. In one or more embodiments, this may occur through a constrained radiosity model under the assumption that raw pixel values can also be used as a pre-estimation of the illumination values as measured.

For instance, under the assumption of a calibrated camera and under the assumption of a Lambertian scene, the pixel-values from the camera provides in the ideal case the exact illumination values over the scene.

The designation "ray tracing" applies to techniques that can generate near photo-realistic computer images. A variety of software tools (both free and commercial) are currently available for generating corresponding images.

Similarly, "radiosity" denotes the light energy given off by a surface.

The amount of light emitted from a surface can be specified as a parameter in a model, where the reflectivity of the surface is also specified.

For instance, the amount of light emitted from a surface element (patch) depends on its albedo value p and the amount of its incident illumination, which is the sum of the direct illumination from the luminaires and the indirect illumination from the adjacent surface patches of the environmental objects.

The amount of incident light hitting the surface can be calculated by adding the amount of energy other surfaces contribute.

Various rendering methods used in computer graphics may be based on radiosity in order to analyze the light reflected from diffuse surfaces.

Light at a given point can be modelled as comprising diffuse, specular, and ambient components, with the possibility of resorting for simplicity to an ideal model which handles only the diffuse ambient component (Lambertian scene) while retaining the possibility of also considering specular and ambient components.

These components can be combined to determine the illumination or color of a point.

The images resulting from a radiosity renderer may exhibit soft, gradual shadows. Radiosity can be used, e.g. to render (indoor) images of buildings with realistic results for scenes including diffuse reflecting surfaces.

Also, by using a camera, one or more embodiments can cover larger areas with a (much) higher spatial resolution as compared to conventional manual light measurement.

One or more embodiments facilitate real-time measurement of the illumination across a scene even in the absence of previous knowledge of the environment.

One or more embodiments can be automated making it unnecessary to rely on the expertise of dedicated technical personnel.

In one or more embodiments, multiple light sources and/or multiple types of light sources (natural/artificial) can be addressed simultaneously.

In those cases where a complete geometry and reflectance map of the scene is acquired, the possibility exists, at least notionally, of providing information also for those areas of, e.g., a room that the camera sensors do not "see".

One or more embodiments may consider (only) the visible part of the scene, since as the part where form factors and corresponding albedo values can be measured.

Brief description of the figures

One or more embodiments will now be described, by way of example only, with reference to the annexed figures, wherein:

- Figure 1 is exemplary of a space (e.g., an indoor environment) where one or more embodiments are applied,
- Figure 2 is an exemplary view which can be produced in one or more embodiments,
- Figure 3 is exemplary of certain processing which may be implemented in embodiments, and
- Figure 4 is exemplary of a processing pipeline which can be implemented in one or more embodiments.

Detailed description of exemplary embodiments

In the following, one or more specific details are illustrated, aimed at providing an in-depth understanding of examples of embodiments.

The embodiments may be obtained without one or more of the specific details, or with other methods, components, materials, etc.

In other cases, known structures, materials, or operations are not illustrated or described in detail so that certain aspects of embodiments will not be obscured.

Reference to "an embodiment" or "one embodiment" in the framework of the present description is intended to indicate that a particular configuration, structure, or characteristic described in relation to the embodiment is comprised in at least one embodiment.

Hence, phrases such as "in an embodiment" or "in one embodiment" that may be present in one or more points of the present description do not necessarily refer to one and the same embodiment. Moreover, particular conformations, structures, or characteristics may be combined in any adequate way in one or more embodiments.

The references used herein are provided merely for convenience and hence do not define the extent of protection or the scope of the embodiments.

One or more embodiments may be based on the recognition that conventional illuminance measurements obtained from multiple discrete points may not reflect spatial changes of light levels with a desired degree of resolution.

This may be related to the fact that conventional luxmeter-based illuminance measurement solutions are limited (only) to certain areas of installation (point-wise measurements).

These conventional meter-based methods for light level measurement inevitably involve limitations in interpreting spatial changes of a luminous environment in large architectural spaces and/or luminous environments exposed to varying daylight.

It is noted that a camera-based measurement of the illuminance of a surface in relation to directly-converted emittance of a surface may represent an alternative worth being investigated.

The pixel intensity from a camera sensor is a relative measure of the light reflected by a surface (luminance) which is the visible brightness of the object surface element.

Such a visible brightness may depend on a variety of components related to the materials of the object(s) and the reflectance properties thereof. Also, such visible brightness may depend on ambient (e.g., room) geometry and on how light propagates in the environment and is finally influenced by the amount of light reaching the given surface (luminous flux).

The knowledge of these characteristic parameters of the environment facilitates developing a method for computing spatial illuminance ratios of the surface elements involved and providing a reliable estimation of the global illumination uniformity across a scene even when using the restrictive assumption of Lambertian surfaces.

To that effect a number of characteristic parameters of the environment may be collected upfront.

These may include:

- illumination power and position with respect to lighting sources (e.g., luminaires);
- albedo map of the scene surface;
- geometrical layout of the scene surface; this facilitates determining geometrical form factors of the scene for calculating the influence on the illumination level of the surface elements which may derive primarily from direct illumination of the luminaires and may also be due to mutual surface-to-surface inter-radiation.

These parameters of the scene may be used both for simulating the illumination with common light planning tools (such as ray tracing or radiosity tools) and for verifying the results by measuring the illumination values across the scene in the aftermath.

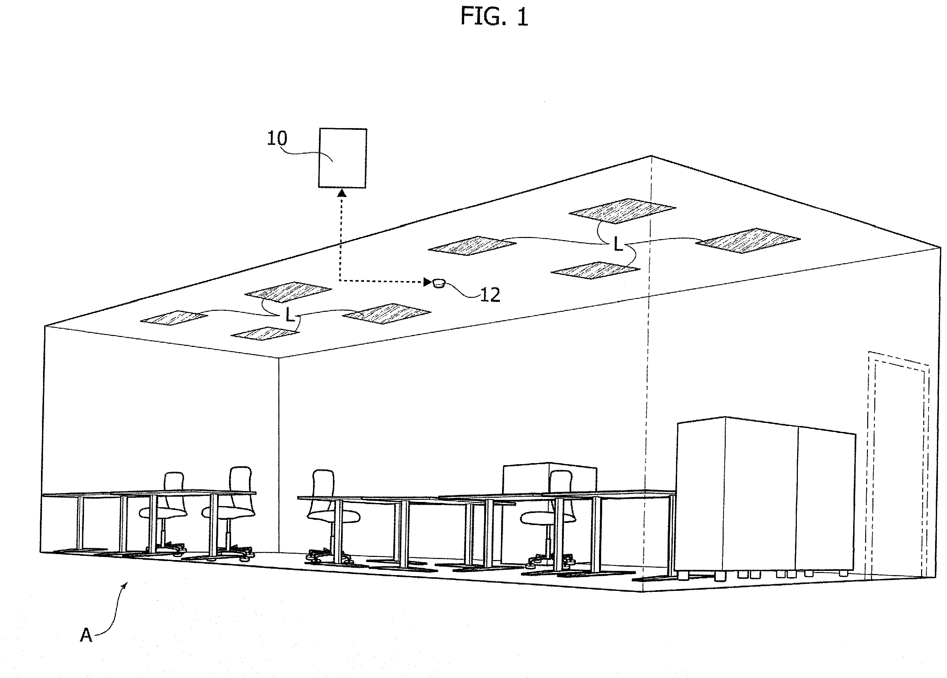

As exemplified in Figure 1, one or more embodiments may comprise a processing unit 10 (e.g., an embedded platform) coupled - in any known manner for that purpose - with a set of sensors (e.g. a RGB camera sensor and a 3D-depth-camera sensor) collectively designated 12.

In one or more embodiments, the set of sensors 12 can be installed, e.g. at a "elevated" position in an ambient (e.g. a room A) to be lit, e.g., via luminaires L, which facilitates obtaining a perspective top view of the ambient.

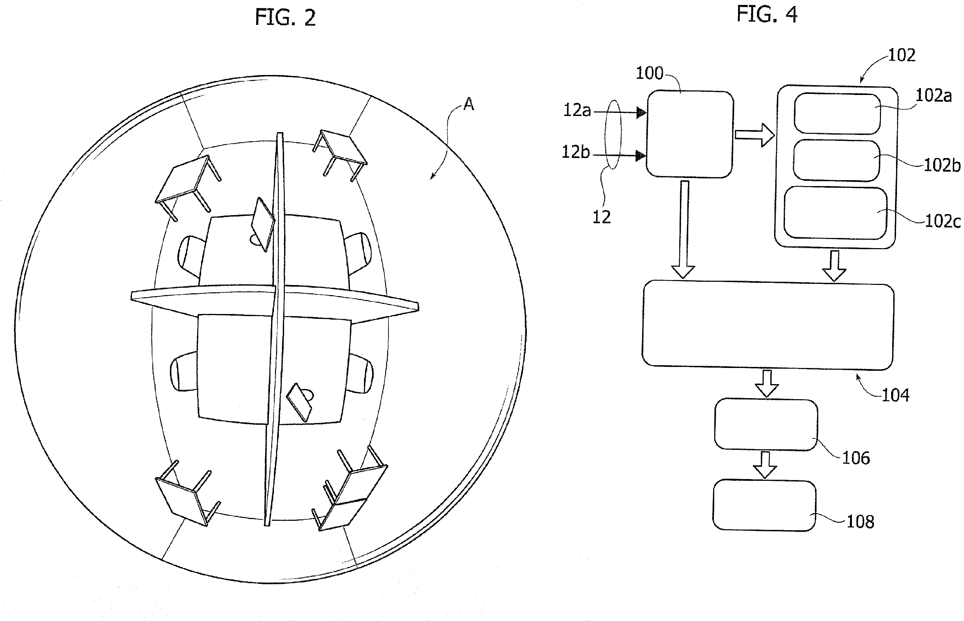

Figure 2 is exemplary of such (e.g. "fish-eye") view.

In one or more embodiments as exemplified in Figures 1 and 2, the possibility thus exists of providing a camera-based long-term observation of the ambient (that is, the "scene") A, e.g., by using an RGB camera sensor 12a in the set 12.

In one or more embodiments, the position and the strength (intensity) of the light sources (e.g. luminaires) L can thus be derived (detected). This may occur, e.g., as disclosed in [3], or by resorting to other known alternative solutions.

Similarly, by considering the geometrical layout from a 3D-depth-sensor 12b possibly included in the set 12, a corresponding albedo map of the scene A can also be derived. This may again occur, e.g., as disclosed in [3], or by resorting to other known alternative solutions.

By considering the geometrical layout from a 3D-depth-camera the corresponding form factors of the scene can also be derived, thus obtaining a set of valuable features for a radiosity model.

As discussed previously, radiosity is a (global) illumination model commonly used in the field of computer graphics for representing photorealistic rendering techniques.

The input of the classic radiosity method consists of a list of patches (e.g., triangles may be considered as an example for simplicity) having:

- an (average) self-emitted radiosity $eps_i$,
- an (average) reflectivity $\rho_i$

from which (average) total radiosities $r_i$ can be computed.

That is, the input to a conventional classic radiosity model may comprise three main parameters for a list of patches (triangles, tetrahedral, etc) into which an entire scene can be "scattered".

Also, mutual geometrical interaction/representation can be extracted as a square matrix called form factor matrix, along with their average self-emittance and reflectivity factor (albedo).

This may occur according to arrangements that are known per se, thus making it unnecessary to provide a more detailed description herein.

A possible mathematical formulation can be as follows:

$$R_{(x)} = Eps_{(x)} + \rho_{(x)} \int_s R_{(x')} \frac{1}{\pi} \frac{(cos\theta_x \cdot cos\theta_{x'})}{|x - x'|^2}]dA'$$

or, in the M-notation

$$M_{(x)} = Eps_{(x)} + \rho_{(x)} \int_s M_{(x')} \frac{1}{\pi} \frac{(cos\theta_x \cdot cos\theta_{x'})}{|x - x'|^2}]dA'$$

where

- $R_{(x)}$ or $M_{(x)}$ is the radiosity, that is, the (total) power per unit area leaving the patch surface;
- $Eps_{(x)}$ is the emitted power per unit area leaving the patch surface due to self-radiation which will be caused due to self-glowing surface elements;
- $\rho_{(x)}$ is the Lambertian albedo reflectivity of the point;
- S indicates that the integration variable x' runs over the entire (visible) surface in the scene;
- $\theta_x$ and $\theta_{x'}$ are the angles of the normal in x and x' to their joining line (that is a simple geometry for describing the adjacency of patches with respect to inter-illumination.

As known to those of skill in the art $R_{(x)}$, or $M_{(x)}$ are different notations which can be used to represent the same variable (i.e. radiosity). In the following formulas in both notations will be provided.

For instance, a discrete notation at vector component level can be provides as:

$$Eps_{(x,t)} = R_{(x,t)} - \sum_p \left(1 - \delta_{xp}\right) \cdot \rho_x^T \cdot F_{xp} \cdot R_p$$

or, in the M-notation

$$Eps_{(x,t)} = M_{(x,t)} - \sum_p \left(1 - \delta_{xp}\right) \cdot \rho_x^T \cdot F_{xp} \cdot M_p$$

where the summation $\Sigma$ extends from j=1 to n over the entire number of surface elements.

In the formulas above, $\delta_{ij}$ is the Dirac symbol with 1 for i equal j, else 0: this means that a certain patch i cannot be inter-illuminated by itself, so all the terms with i=j are skipped or nulled in the summation, by means of a cancelling term $(1-\delta_{ij})$, that is:

$$r_i = eps_i + \rho \sum_{j=1}^N (1 - \delta_{ij}) f_{ij} r_j \ , \ \text{for} \ i{=}1 \ \text{to} \ N$$

or, in the M-notation:

$$m_i = eps_i + \rho \sum_{j=1}^N (1 - \delta_{ij}) f_{ij} m_j \ \text{for} \ i{=}1 \ \text{to} \ N$$

Also, $r_i$ and $r_j$ are the radiosities at patches i and j, respectively and the scalar $eps_i$ refers to the self-emittance of patch i.

For instance:

- if one has to do with a light source, this value can be set either to 1 (where 1 corresponds as the maximum luminous intensity of the light source) or to the actual luminous intensity of the light source if this is known;
- otherwise, if the patch does not belong to a light source, the value can be set to 0.

Additionally, $\rho_i$ is the isotropic reflectivity of patch i and $f_{ij}$ is representative of the form factors, e.g., between patch i and patch j.

Various numerical approaches are available for computing the form factors $f_{ij}$. Of these, a ray-tracing-based method may represent a good choice, e.g., due to a more general applicability and efficiency [4, 5].

More in detail, the form factors can be computed by uniformly sampling rays within a unit disc (i.e. the orthogonal projection of a unit sphere), whereby each point on the unit disc defines therefore the direction of a ray in the space. Therefore, the form factors $f_{ij}$ can be computed as the ratio:

$$f_{ij} = \frac{k_j}{k_i}$$

where $k_j$ stands for the number of rays emitted by patch i that reaches patch $j$, and $k_i$ is the total number of rays emitted by facet $i$.

Form factors may encode two main aspects:

- visibility, that is whether two patches are visible one from the other; e.g. this value is equal to zero if there is no line-of-sight between them;
- distance and orientation, which is indicative ("encodes") how well two patches see each other; e.g. low values correspond to very far patches with an oblique line of sight, while high values refer to close fronto-parallel patches.

Form factors may be further constrained to be strictly non-negative and to satisfy the reciprocity relation $a_i f_{ij} = a_j f_{ji}$, where a is the area of each patch ($f_{ji}$ is not a symmetric relation if patches do not have a same size). Finally, if the scene is closed, the form factors $f_{ij}$ between a patch i and all other patches j in the scene add up to one while if the scene is open the sum is less than one.

The radiosity formulation above may give rise to a set of linear equations which can be solved through the radiosity matrix solution as:

$$\underbrace{\begin{bmatrix} 1 - \rho_1 f_{11} & -\rho_1 f_{12} & \cdots & -\rho_1 f_{1n} \\ -\rho_2 f_{21} & 1 - \rho_1 f_{22} & \cdots & -\rho_2 f_{2n} \\ \vdots & \vdots & \ddots & \vdots \\ -\rho_n f_{n1} & -\rho_n f_{n2} & \cdots & 1 - \rho_1 f_{nn} \end{bmatrix}}_{F} \underbrace{\begin{pmatrix} r_1 \\ r_2 \\ \vdots \\ r_n \end{pmatrix}}_{\mathbf{r}} = \underbrace{\begin{pmatrix} e_{ps1} \\ e_{ps2} \\ \vdots \\ e_{psn} \end{pmatrix}}_{\mathbf{e}_{ps}}$$

There, F is an n×n square matrix describing the geometry of the whole scene A in combination with the material reflectivity properties p, which is a vector of dimension n.

Then the vector r of dimension n contains the associated radiosities at each patch and the self-emission $e_{ps}$ vector contains non-zero values at patches corresponding to active light sources.

It will be noted that throughout this description vector notation is not expressly used for simplicity.

One or more embodiments may rely on the concept of resorting to a radiosity model in order to facilitate modeling the effectiveness of light sources L in a space by rendering the visual impression at a certain viewpoint.

For instance, one may consider an indoor environment to be lit of the type depicted in Figure 1.

In general, this may be expected to be:

- illuminated by different illumination sources both artificial (e.g., luminaires L) and natural (e.g. windows exposed to daylight),
- "populated" (e.g., furnished) with different materials and objects (with different photometric properties), and
- oriented in a random way.

As discussed previously, up in the ambient A (e.g. at the ceiling thereof, possibly at the center) a sensor system 12 may be installed comprising, e.g.:

- a simple RGB camera (possibly with fish-eye lenses), designated 12a, and
- a depth measuring sensor, e.g. time of flight (ToF) or Lidar, designated 12b, this being also currently referred to as an RGB-D system.

This environment (ambient A) can thus be subjected to surveillance (monitoring) over time by recording the images thereof provided by a camera system as discussed previously, e.g. from a top view perspective as exemplified in Figure 2.

The output of the camera system 12a, 12b, e.g. a RGB image (e.g., fish-eye) - from 12a - and depth information as a point cloud and distance map - from 12b - are exemplary of information which may be collected in one or more embodiments.

Just by way of reference (e.g. for visualization easiness) that information can be considered to represent a sort of partial CAD model of the point cloud which can be used for further processing acts as discussed in the following.

In one or more embodiments, the views from the two sensors (e.g. RGB camera 12a and depth measuring sensor 12b) can be pre-aligned and synchronized.

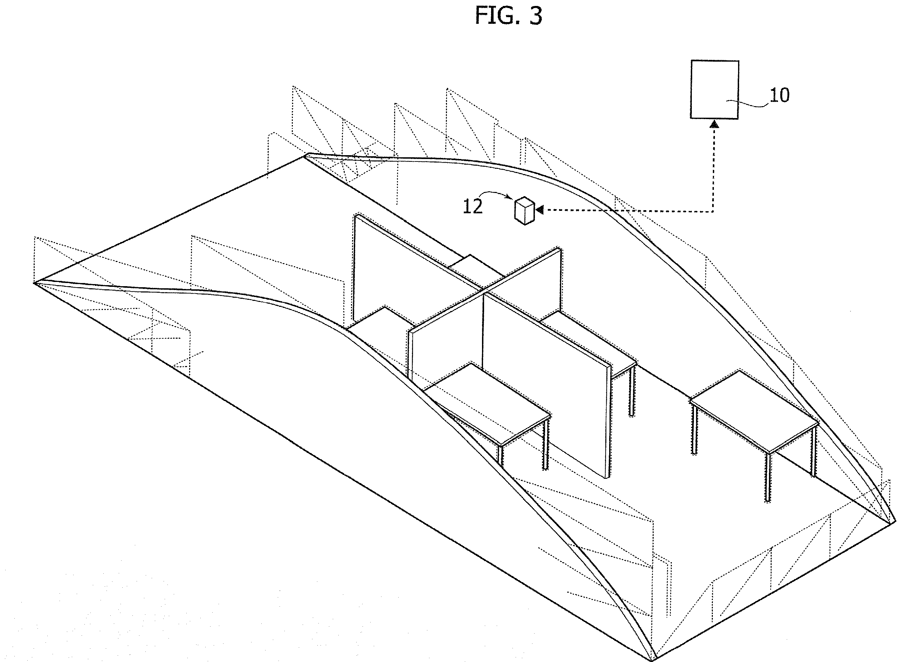

This facilitates mapping the RGB image over the depth information as schematically exemplified in Figure 3.

That figure shows, by way of example, RGB image pixel intensities mapped over a 3D model (depth information) of an ambient A as exemplified in Figures 1 and 2.

One or more embodiments may resort for that purpose to other arrangements such as, e.g., an automatic PnP solution as described in [6]. Point-to-Point (PnP) alignment is indicative of how a point from one view is matched with the same point in another view.

The related output - that is, images and a (partial) geometric representation - can be processed in the embedded (or server/cloud based) unit 10 coupled to the sensor system 12 based on a radiosity model in order to provide a measurement/evaluation of the spatial and/or temporal illuminance changes in the ambient A as viewed from the sensor system 12 (see e.g. Figure 2).

Such a measurement/evaluation of the spatial and temporal illuminance/luminance changes in an (e.g., indoor) ambient A as detected make it possible to map pixel values onto respective, corresponding lux values.

The procedure can be repeated over time, e.g. in respect of time-synchronized frames taken from the two camera sensors 12a (RGB) and 12b (depth) to obtain a (partial) representation of the ambient (scene) A.

In one or more embodiments, the parameters from the camera-based long-term observation of the scene may provide a (complete) set of information items. This may be used, similarly to what happens in conventional light planning software, to simulate the prevailing illumination intensity across a scene.

One or more embodiments may thus involve the acquisition of physical components of a scene A which may use in providing a radiosity model based (exclusively) on a set of observations by camera sensors 12a, 12b.

Once the luminous intensity is determined, measurements of the luminous intensity across the scene can be used for applications related to light commissioning and/or configuring and managing smart lighting systems.

For instance, the knowledge of (e.g. high-resolution) luminous intensity (illumination) values across a scene A may be helpful for light designers and light planners. Also, real-time measurement of the luminous intensity (illumination values) in high resolution across a scene may be exploited in deriving a representative monitoring as input for light management regulation loops.

One or more embodiments may rely on a procedure which takes into account the information provided from an RGB-D camera system (e.g. 12a, 12b) and processes it to provide real-time spatial and temporal measurements of the illumination of a scene.

In a first possible embodiment, the measured pixel values of the image taken from the scene by a calibrated camera system 12 as discussed previously can be directly used for computing a prevailing illumination value across the scene as $L=L_{(x,t)}$.

Here, $L_{(x,t)}$ is a 1-dimensional vector (having a size N = m x n, where m, n are the dimensions of the captured image) indicative of the measured luminance values across the scene, thus representing an image of the scene A captured by a calibrated camera system (e.g., 12).

Under the (reasonable) assumption of a Lambertian scene, the measured luminance values can be converted directly to the corresponding emittance values $R_{(x,t)}$ or $M_{(x,t)}$ of the surface areas across the scene as:

$$R_{(x,t)} = \pi * L_{(x,t)}$$

or, in the M-notation

$$M_{(x,t)} = \pi * L_{(x,t)}$$

where $M_{(x,t)}$ or $R_{(x,t)}$ is another 1-dimensional vector having a size n representative of the measured emittance values across the scene A, which represents the emittance of the surface patches across the scene.

The albedo values $\rho_{(x)}$ of the surfaces across the scene which are acquired from previous long-term observation of the scene may be subjected to an intrinsic decomposition procedure algorithm (as described, e.g., in [7]) or other techniques (as described, e.g. in [8]), so that $\rho_{(x,t)}$ is a 1-dimensional vector of the size n, can be expressed as a vector of inverted components $1/\rho_{(xi,t)}$, e.g.:

$$\rho_{inv(x,t)} = [...\left(\frac{1}{\rho_{(x_i,t)}}\right)...]$$

where $\rho_{inv(x,t)}$ is a 1-dimensional vector (of size n) of the inverted values of the acquired albedo values of the patches across the scene.

Based on the knowledge of the inverted albedo values $\rho_{inv(x,t)}$ of the patches across the scene, the prevailing illumination $E_{(x,t)}$ across the scene can be derived as a simple vector dot-product, e.g. as:

$$E_{(x,t)} = R_{(x,t)} \, \rho_{inv(x,t)}$$

or, in the M-notation

$$E_{(x,t)} = M_{(x,t)} \, \rho_{inv(x,t)}$$

where $E_{(x,t)}$ is a 1-dimensional vector of size n, which represents the illumination values of the surfaces across the scene.

For the sake of clarity, it will be noted that $E_{(x,t)}$ is the incident illumnation on the surface patch and is not related to $E_{(x)}$ or $E_{ps(x)}$ as the emitted power per unit area leaving the patch surface as discussed previously.

It will be appreciated that a vector dot product multiplies the mutual components and keeps the vector dimension.

The entire formula chain, the concept of the camera based real-time measurement of the illumination across the scene can be summarized as:

$$E_{(x,t)} = \pi * L_{(x,t)} \rho_{inv(x,t)}$$

This means that by the observation (measurement) of the scene with a calibrated camera (measuring the real $L_{(x,t)}$) and by knowing the albedo $\rho$ of the scene's patches, the real (net) incident illumination $E_{(x,t)}$ in [lm/m$^2$] can be derived.

In one or more embodiments, a solution as the one described above can be obtained by considering a radiosity model discussed previously.

Essentially, the radiosity model corresponds to the knowledge of the albedo values $\rho$ and the form factors *fij* and the real position and luminous intensity of the light sources.

Consequently, by knowing the radiosity model it is also possible to decompose the measured net illuminations $E_{(x,t)}$ into their components as the sum of direct illumination from the luminaires $E_{d(x,t)}$ and the incident coming from the mutual inter-reflection as:

$$E_d = \pi * (I - \rho F) * L \cdot \rho_{inv}$$

In one or more embodiments, this may occur according to a processing pipeline (which may be implemented in the unit 10) corresponding to the logical diagram shown in Figure 4.

In the diagram of Figure 4 the block 100 indicates RGB-D input data which may be acquired as discussed previously (camera system 12a, 12b).

In one or more embodiments as exemplified in Figure 4, such data can be supplied to a set of processing blocks/modules 102 as discussed in the following.

In one or more embodiments as exemplified in Figure 4, the results of computing acts performed in the modules 102 are provided, along with RGB-D data 100 to a further block/module 104 configured for solving a (camera-aided) constrained radiosity model.

As a result the block/module 104 can provide a mapping 106 of radiosity values onto illuminance values adapted to be supplied to a "user" entity 108.

A light design/control/planning instrument/tool as currently used by light designers and light planners and/or a controller unit configured to control (possibly in real time) the lighting action of the luminaries L lighting the scene A may be exemplary of such a user entity 108.

It will be appreciated that configuring the block/modules collectively indicated as 102 in order perform the processing acts discussed in the following involves applying, e.g. software tools which are known per se, thus making it unnecessary to provide a more detailed description herein.

For instance, a radiosity model can be considered as a refinement of the solution discussed previously insofar as this may not depend on a pre-calibrated camera system and can also address the case of a noisy input by just considering the raw input from a camera system.

For instance, one or more embodiments may rely on the availability of, e.g. RGB image pixel intensities mapped onto depth information (3D model) as presented, e.g. in Figure 3.

The related information for the solution of the radiosity matrix can be attempted to be extracted as discussed previously.

That information may include (based on a radiosity model):

- the reflectivity properties of the material/objects of the scene, $\rho$
- the form factors, *fij*
- the position and identification of the light sources (e.g., L) in space, vector e (sometimes referred to as vector $e_d$ = direct illumination).

As noted, these elements can be extracted based on camera-aided methods proposed in the literature and are adapted for the real-time computation of the radiosity model.

To that effect, the block/modules collectively indicated as 102 in Figure 4 can be configured to comprise:

- a first module 102a for computing reflectance,
- a second module 102b for computing form factors,
- a third module 102c for computing the luminous intensity and the positions in space of light sources in ambient A.

In one or more embodiments, conventional techniques of intrinsic decomposition as described in [7], [8] and [3] can be applied in the first module 102a in order to determine the reflectivity properties of the material/objects of the scene by camera-based methods.

In one or more embodiments, the extraction of the geometrical form factors of the surface elements in the scene, as performed in the second module 102b may be based on 3D-data from a Time-of-Flight (ToF) detector or a Lidar can be considered.

In one or more embodiments, the third module 102c may extract the light sources position and identification in space from given images of the scene as disclosed, e.g. in [3], where the positions of the light sources were determined by evaluating long-term observations of the scene with the knowledge of the scenes geometry and lambertian reflectivity.

Under the circumstances, one can make the (sensible) assumption that raw format image pixels correspond to a noisy estimation of the actual radiosity values (see, e.g., [9]).

For that reason, one or more embodiments may not use a straightforward calculation of the illuminance by just considering them as the luminance in the Lambertian assumption formulation, this may lead to calculating the illuminance with a higher error, which may be acceptable for certain applications.

In one or more embodiments, based on such information, the block 104 can solve the radiosity matrix based on a constrained radiosity estimation by defining e.g. a cost function such as:

$$\underset{\mathbf{r}}{\text{minimize}} \quad \|\mathbf{g} - \mathbf{D}_\rho\, \bar{\mathbf{r}}\|_2^2$$

$$\text{subject to} \quad \mathbf{F}\,\mathbf{r} = \mathbf{e},$$

where:

- g is a sub-vector of r which contains the raw pixel information for the surfaces that are visible by the camera system, and
- $D_\rho$ is the reflectivity properties corresponding to the visible surfaces.

In other words, one may calculate an optimized solution for r considering the raw pixel information taken from the images.

The calculated radiosity (radiant exitance) values can then be back-related to illuminance by considering the Lambertian assumption as presented in the equation above, where $L_{(x,t)}$ is now replaced by the computed radiosity values $R_{(x,t)}$ or $M_{(x,t)}$.

Therefore the equation as discussed previously is formed as:

$$E_{(x,t)} = \pi * R_{(x,t)} \cdot \rho_{inv(x,t)}$$

or, in the M-notation

$$E_{(x,t)} = \pi * M_{(x,t)} \cdot \rho_{inv(x,t)}$$

which may facilitate a dense measurement of the illumination across the scene.

Consequently, the camera-based observation of the scene facilitates the provision of the parameters involved in computing the illuminance across a scene by applying the state-of-the-art radiosity concept for scene rendering.

Figure 4 is an exemplary representation of a pipeline which facilitates determining (in a high spatial resolution of the scene) illuminance in an ambient A by computing the parameters to be given as input to the radiosity model, namely:

1) the reflectance values of the scene,
2) the geometrical form factors from the 3D input of the scene, and
3) the real position and luminous intensity of the light sources.

These three parameters (together with the actual pixel intensities) can be used in order to solve the radiosity formulation in an efficient way for computing the prevailing illuminance values.

In one or more embodiments the measured pixel values of the image taken (at 12) from the scene A are used by considering the radiosity model as an improved version of the embodiment discussed previously for computing the illumination value across the scene due to the direct illumination from light sources only.

The formula tool chain bases on the radiosity model for describing the global illumination can take the form:

$$M_{(x,t)} = Eps_{(x,t)} + \int \left[ \frac{(cos\theta_x \cdot cos\theta_p)}{\pi \, (|x-p|)^2} \cdot \rho_{(x)} \cdot M_{(p,t)} \right] dAp$$

or, in the *R*-notation

$$R_{(x,t)} = Eps_{(x,t)} + \int \left[ \frac{(cos\theta_x \cdot cos\theta_p)}{\pi \, (|x-p|)^2} \cdot \rho_{(x)} \cdot R_{(p,t)} \right] dAp$$

that is:

$$R_{(x)} = Eps_{(x)} + \rho_{(x)} \int_S R_{(x')} \frac{1}{\pi} \frac{(cos\theta_x \cdot cos\theta_{x'})}{|x-x'|^2} \right] dA'$$

or, in the M-notation

$$M_{(x)} = Eps_{(x)} + \rho_{(x)} \int_S M_{(x')} \frac{1}{\pi} \frac{(cos\theta_x \cdot cos\theta_{x'})}{|x-x'|^2} \right] dA'$$

which corresponds to the formula seen previously,
where:

-   $M_{(x,t)}$ or $R_{(x,t)}$ is the emittance of the patch at *(x,t)*
-   $Eps_{(x,t)}$ is the emittance of the patch at (x,t), due to self-emittance from direct illumination
-   $\rho_{(x)}$ is the Lambertian albedo reflectivity of the patch itself
-   $p$ (an abbreviated notation for the surface integration variable $x_p = x_{patch}$) indicates the integration variable across the entire surface in the scene
-   $\theta$ and $\theta p$ are the angles of the normals in x and $x_p = p$ to their joining line.

Also, the denoted integral refers to the collection across the entire visible surface of the scene.

In a discrete notation, the term within the integral can be written as a square matrix $F_{(p,x,t)}$

$$Eps_{(x,t)} = M_{(x,t)} - \sum_{p}(1 - \delta_{xp}) \cdot \rho_x^T \cdot F_{xp} \cdot M_p$$

or in the R-notation

$$Eps_{(x,t)} = R_{(x,t)} - \sum_{p}(1 - \delta_{xp}) \cdot \rho_x^T \cdot F_{xp} \cdot R_p$$

where:

- $\delta_{px}$ is the Dirac symbol with value 1 for p different from x else 0, to facilitate avoiding to include the patch at (x,t), and
- $F_{px}$ represents the form factors as a square matrix of size $n \times n$ which carries the information about the geometrical alignment of the patches as well as the albedo values if the patches.

The information about the geometrical alignment of the patches is retrieved, e.g. from a point cloud of a depth camera (e.g. time-of-flight as ToF, Lidar, etc) which observes the scene as discussed previously, while the albedo values of the patches are retrieved from the long term scene observation according to the method of image decomposition as already mentioned above.

In one or more embodiments, in order to facilitate solution for self-emittance, namely $Eps_{(x,t)}$, the formula can be written as

$$Eps_{(x,t)} = M_{(x,t)} - \sum_{p}(1 - \delta_{xp}) \cdot \rho_x^T \cdot F_{xp} \cdot M_p$$

or, in the R-notation

$$Eps_{(x,t)} = R_{(x,t)} - \sum_{p}(1 - \delta_{xp}) \cdot \rho_x^T \cdot F_{xp} \cdot R_p$$

which can be condensed by using the identity matrix I as:

$$Eps_{(x,t)} = \sum_{p}(I - \rho_x F_{x,p})M_p$$

or, in the R-notation

$$Eps_{(x,t)} = \sum_{p}(I - \rho_x F_{x,p})R_p$$

Changing the notation from (x,p) to (i,j) leads to a conventional matrix notation as:

$$Eps_i = \sum_{j}(I - \rho_i F_{i,j})M_j$$

or, in the R-notation

$$Eps_i = \sum_j (I - \rho_i F_{i,j}) R_j$$

This facilitates referring to an index-free pure matrix representation as a standard matrix-vector-multiplication:

$$Eps = (I - \rho F)M$$

or, in the *R*-notation

$$Eps = (I - \rho F)R$$

where:

- (I-F) represents a square matrix of size n x n in the form of an optical transfer matrix,
- *Eps* and M, *R* each represent a 1-dimension vector of size n.

In one or more embodiments, Eps can be computed based on the radiosity model described previously.
For a Lambertian scene, *Eps* is found to correspond directly to the albedo value p with its direct illumination as:

$$Eps = \rho * E_d$$

correspondingly

$$R = \rho * E$$

Since M or R correspond directly to the visible emittance, the visible luminance L for a lambertian scene is:

$$L = \frac{M}{\pi} \ \ \text{or} \ \ L = \frac{R}{\pi}$$

therefore the formula above can be written as

$$\rho * E_d = (I - F) * (L * \pi)$$

that is:

$$E_d = \pi * (I - F) * (L \cdot \rho_{inv})$$

This facilitates extracting the illumination across the room only due to the illumination from the light source w/o considering the mutual inter-reflections occurring in the ambient A.
In one or more embodiments, in order to facilitate solution for the radiosity, namely *M* or *R*, deriving from equation (2) the formula is to be written as:

$$M = (I - \rho F)^{-1} Eps$$

or, in the *R*-notation

$$R = (I - \rho F)^{-1} Eps$$

In one or more embodiments, in order to facilitate obtaining a solution for the reflectivity or albedo, namely $\rho$, the formula above can be written as:

$$\rho = \frac{M - Eps}{FM}$$

or in the *R*-notation

$$\rho = \frac{R - Eps}{FR}$$

Consequently, depending on what entities can be considered known these formulas can be solved in order to find the unknown entities.

For instance, in one or more embodiments one may explicitly calculate a shading map, which is the remainder of the total illumination $E_{(x,t)}$ and the direct illumination $E_{d(x,t)}$ from luminaires, e.g., as:

$$S_{(x,t)} = E_{(x,t)} - E_{d(x,t)} = \pi * L \cdot \rho_{inv} - \pi * (I - F) * L \cdot \rho_{inv}$$

$$S_{(x,t)} = \pi * F * L \cdot \rho_{inv}$$

where

- $(L\rho_{inv})$ is a vector-dot product (not a scalar product)
- $F^* (L\rho_{inv})$ is a standard matrix-vector product
- $S_{(x,t)}$ is a one-dimensional vector of size n, so that S explicity represents the measured shading map of the scene.

## LIST OF DOCUMENTS CITED

[1] DIALux software - https://www.dial.de/en/dialux/. Accessed: 2017-11-16

[2] Relux software - https://relux.com/en/. Accessed: 2017-11-16

[3] PCT Patent Application PCT/IB2017/056246

[4] B. Beckers, et al.: "Fast and accurate view factor generation", FICUP, An International Conference on Urban Physics, 09 2016

[5] L. Masset, et al.: "Partition of the circle in cells of equal area and shape", Technical report, Structural Dynamics Research Group, Aerospace and Mechanical Engineering Department, University of Liege, 'Institut de Mécanique et Genie Civil (B52/3), 2011.

[6] M. Chandraker, et al.: "On the duality of forward and inverse light transport". IEEE Trans. Pattern Anal. Mach. Intell., 33(10):2122-2128, Oct.2011

[7] Jian Shi, et al.: "Efficient intrinsic image decomposition for RGBD images", in Proceedings of the 21st ACM Symposium on Virtual Reality Software and Technology (VRST '15), Stephen N. Spencer (Ed.). ACM, New York, NY, USA, 17-25. DOI: https://doi.org/10.1145/2821592.2821601

[8] Samuel Boivin: "Fitting complex materials from a Single Image", ACM SIGGRAPH 2002 Course Notes #39, "Acquiring Material Models Using Inverse Rendering" Steve Marschner and Ravi Ramamoorthi

[9] S. Boivin, et al.: "Advanced Computer Graphics and Vision Collaboration Techniques for Image-Based Rendering", Imaging and Vision Systems: Assessment and Applications, Jacques Blanc-Talon and Dan Popescu, Section 4.

The extent of protection is determined by the annexed claims.

In that respect, it will be appreciated that throughout this description both the M-notation, e.g., *M(x,t),* and the *R*-notation, e.g. *R(x,t)*, have been used for the sake of clarity, being understood that, unless otherwise indicated, these notations are intended to refer to the same physical entities.

<u>LIST OF REFERENCE SIGNS</u>

| | |
|---|---|
| Lighting devices/sources | L |
| Environment | A |
| Processing unit | 10 |
| Set of sensors | 12 |
| RGB camera sensor | 12a |
| 3D-depth-camera sensor | 12b |
| Reflectance information | 120a |
| Form factors | 120b |
| Lighting intensity and position information | 120c |
| Block/module | 104 |
| Mapping | 106 |

**Claims**

1. A method, comprising:

   - capturing (12) a plurality of images of an illuminated (L) environment (A) via long-term observation, wherein said capturing (12) comprises acquiring RGB image pixel intensities (12a) and image depth information (12b) of the illuminated (L) environment (A),
   - extracting from said plurality of images comprising depth information (12b) of the illuminated (L) environment (A):

      - a) reflectance information (120a) of said environment (A),
      - b) form factors (120b) of said environment (A), and
      - c) lighting intensity and position information (120c) of light sources (L) illuminating said environment (A),

   - generating, as a function of said reflectance information (120a), said form factors (120b) and said lighting intensity and position information (120c), a radiosity model of said environment (A),
   - solving (104) said radiosity model to produce radiosity values of surface areas across said environment (A), and
   - mapping (106) said radiosity values to illumination values of said surface areas across said environment (A),
   - extracting (10) from said plurality of images captured light emittance values, $M_{(x,t)}$ or $R_{(x,t)}$, as well as albedo values $\rho_{(x)}$ of said surface areas across the environment (A),
   - computing (10) illumination values $E_{(x,t)}$ of said surface areas across the environment (A) as a function of said emittance values and said albedo values $\rho_{(x)}$.

2. The method of claim 1, comprising:

   - computing (10) from said plurality of images of an illuminated (L) environment (A) measured luminance values $L_{(x,t)}$ of said surface areas across the environment (A),
   - converting the measured luminance values $L_{(x,t)}$ to corresponding emittance values of said surface areas across the environment (A).

3. The method of claim 2, comprising:

   - arranging said emittance values in a vector,
   - computing a vector of the inverted values of the acquired albedo values,
   - computing said illumination values $E_{(x,t)}$ as a vector dot-product of said emittance value vector and said vector of the inverted values of the acquired albedo values.

4. The method of claim 1, including solving (104) said radiosity model by solving the radiosity matrix based on a constrained radiosity estimation.

5. The method of claim 1 or claim 4, taken in combination with claim 2, wherein converting the measured luminance values $L_{(x,t)}$ to corresponding emittance values comprises replacing said measured luminance values $L_{(x,t)}$ with said radiosity values.

6. The method of any of claims1, 4 or 5, comprising:

- extracting from said plurality of images comprising depth information (12b) of the illuminated (L) environment (A) visibility information indicative of the presence or absence of line-of-sight visibility between pairs of surface areas across said environment (A); and
- including said visibility information in said radiosity model of said environment (A).

7. A lighting system comprising:

- a set of lighting devices (L) for lighting an environment (A),
- an image capture arrangement (12) configured to capture a plurality of images of said illuminated (L) environment (A), wherein the image capture arrangement (12) comprises a first RGB image sensor (12a) configured to capture an image, preferably a fish-eye image of the illuminated (L) environment (A), and an image depth sensor (12b) sensitive to depth information of the illuminated (L) environment (A), and
- a signal processing unit (10) coupled to the image capture arrangement (12) and configured to:

- a) compute (10) illumination values $E_{(x,t)}$ of surface areas across the environment (A) with the method of any of claims 1 to 6, and
- b) coordinate operation of said set of lighting devices (L) as a function of the illuminated values $E_{(x,t)}$ computed.

8. A computer program product, loadable in at least one signal processing unit (10) and including software code portions for performing the steps of the method of any of claims 1 to 6, when executed by the signal processing unit of a system according to claim 7.

9. Use of the method of any of claim 1 to 6 in computing (10) illumination values $E_{(x,t)}$ of surface areas across an environment (A) for the application of light commissioning thereto.

10. Use of the method of any of claim 1 to 6 in computing (10) illumination values $E_{(x,t)}$ of surface areas across an environment (A) for the application of light management and adjustment based on light standards or predefined scenarios.

11. Use of the method of any of claim 1 to 6 in computing (10) illumination values $E_{(x,t)}$ of surface areas across an environment (A) for the application of smart lighting and quality living and working environments.

**Patentansprüche**

1. Verfahren, umfassend:

Aufnehmen (12) mehrerer Bilder einer beleuchteten (L) Umgebung (A) mittels Langzeitbeobachtung, wobei das Aufnehmen (12) Erfassen von RGB-Bildpixelintensitäten (12a) und Bildtiefeninformation (12b) der beleuchteten (L) Umgebung (A) umfasst,
Extrahieren aus den mehreren Bildern, umfassend Tiefeninformation (12b) der beleuchteten (L) Umgebung (A) von:

a) Reflektanzinformation (120a) der Umgebung (A),
b) Formfaktoren (120b) der Umgebung (A), und
c) Beleuchtungsintensitäts- und Positionsinformation (120c) von Lichtquellen (L), die die Umgebung (A) beleuchten,

Erzeugen, als eine Funktion der Reflektanzinformation (120a), der Formfaktoren (120b) und der Beleuchtungsintensitäts- und Positionsinformation (120c), eines Radiositätsmodells der Umgebung (A),
Lösen (104) des Radiositätsmodells, um Radiositätswerte von Oberflächenbereichen über die Umgebung (A) zu erzeugen, und

Abbilden (106) der Radiositätswerte auf Beleuchtungswerte der Oberflächenbereiche über die Umgebung (A), Extrahieren (10), aus der Vielzahl von Bildern, aufgenommener Lichtemittanzwerte, $M_{(x,t)}$ oder $R_{(x,t)}$, sowie Albedowerte $\rho_{(x)}$ der Oberflächenbereiche über die Umgebung (A),
Berechnen (10) von Beleuchtungswerten $E_{(x,t)}$ der Oberflächenbereiche über die Umgebung (A) als eine Funktion der Emittanzwerte und der Albedowerte $\rho_{(x)}$.

2. Verfahren nach Anspruch 1, umfassend:

Berechnen (10), aus der Vielzahl von Bildern einer beleuchteten (L) Umgebung (A), gemessener Luminanzwerte $L_{(x,t)}$ der Oberflächenbereiche über die Umgebung (A),
Konvertieren der gemessenen Luminanzwerte $L_{(x,t)}$ in entsprechende Emittanzwerte der Oberflächenbereiche über die Umgebung (A).

3. Verfahren nach Anspruch 2, umfassend:

Anordnen der Emittanzwerte in einem Vektor,
Berechnen eines Vektors der invertierten Werte der erfassten Albedowerte,
Berechnen der Beleuchtungswerte $E_{(x,t)}$ als ein Vektorskalarprodukt des Emitttanzwertvektors und des Vektors der invertierten Werte der erfassten Albedowerte.

4. Verfahren nach Anspruch 1, beinhaltend Lösen (104) des Radiositätsmodells durch Lösen der Radiositätsmatrix basierend auf einer eingeschränkten Radiositätsschätzung.

5. Verfahren nach Anspruch 1 oder Anspruch 4, in Kombination mit Anspruch 2 genommen, wobei Konvertieren der gemessenen Luminanzwerte $L_{(x,t)}$ in entsprechende Emittanzwerte Ersetzen der gemessenen Luminanzwerte $L_{(x,t)}$ durch die Radioitätswerte umfasst.

6. Verfahren nach einem der Ansprüche 1, 4 oder 5, umfassend:

Extrahieren, aus der Vielzahl von Bildern umfassend Tiefeninformation (12b) der beleuchteten (L) Umgebung (A), von Sichtbarkeitsinformation, die das Vorhandensein oder Nichtvorhandensein von Sichtliniensichtbarkeit zwischen Paaren von Oberflächenbereichen über die Umgebung (A) anzeigt; und
Beinhalten der Sichtbarkeitsinformation in das Radioitätsmodell der Umgebung (A).

7. Beleuchtungssystem, umfassend:

einen Satz von Beleuchtungsvorrichtungen (L) zum Beleuchten einer Umgebung (A),
eine Bildaufnahmeanordnung (12), die konfiguriert ist, eine Mehrzahl von Bildern der beleuchteten (L) Umgebung (A) aufzunehmen, wobei die Bildaufnahmeanordnung (12) einen ersten RGB-Bildsensor (12a), der konfiguriert ist, ein Bild aufzunehmen, vorzugsweise ein Fischaugenbild der beleuchteten (L) Umgebung (A), und einen Bildtiefensensor (12b), der für Tiefeninformation der beleuchteten (L) Umgebung (A) empfindlich ist, umfasst, und
eine Signalverarbeitungseinheit (10), die mit der Bildaufnahmeanordnung (12) gekoppelt ist und konfiguriert ist zum:

a) Berechnen (10) von Beleuchtungswerten $E_{(x,t)}$ von Oberflächenbereichen über die Umgebung (A) mit dem Verfahren nach einem der Ansprüche 1 bis 6, und
b) Koordinieren des Betriebs des Satzes von Beleuchtungsvorrichtungen (L) als eine Funktion der berechneten Beleuchtungswerte $E_{(x,t)}$.

8. Computerprogrammprodukt, das in mindestens eine Signalverarbeitungseinheit (10) ladbar ist und Softwarecodeabschnitte zum Durchführen der Schritte des Verfahrens nach einem der Ansprüche 1 bis 6 beinhaltet, wenn es durch die Signalverarbeitungseinheit eines Systems nach Anspruch 7 ausgeführt wird.

9. Verwendung des Verfahrens nach einem der Ansprüche 1 bis 6 beim Berechnen (10) von Beleuchtungswerten $E_{(x,t)}$ von Oberflächenbereichen über eine Umgebung (A) für die Anwendung von Lichtinbetriebnahme darauf.

10. Verwendung des Verfahrens nach einem der Ansprüche 1 bis 6 beim Berechnen (10) von Beleuchtungswerten $E_{(x,t)}$

von Oberflächenbereichen über eine Umgebung (A) für die Anwendung von Lichtmanagement und -einstellung basierend auf Lichtstandards oder vordefinierten Szenarien.

11. Verwendung des Verfahrens nach einem der Ansprüche 1 bis 6 beim Berechnen (10) von Beleuchtungswerten $E_{(x,t)}$ von Oberflächenbereichen über eine Umgebung (A) für die Anwendung von intelligenter Beleuchtung und hochwertigen Wohn- und Arbeitsumgebungen.

**Revendications**

1. Un procédé, comprenant :

   - la capture (12) d'une pluralité d'images d'un environnement (A) illuminé (L) via une observation à long terme, ladite capture (12) comprenant l'acquisition d'intensités de pixels d'image RVB (12a) et d'une information de profondeur d'image (12b) de l'environnement (A) illuminé (L),
   - l'extraction, de ladite pluralité d'images comprenant l'information de profondeur (12b) de l'environnement (A) illuminé (L) :

     - (a) d'une information de réflectance (120a) dudit environnement (A),
     - (b) de facteurs de forme (120b) dudit environnement (A), et
     - (c) d'une information d'intensité lumineuse et de position (120c) de source lumineuse (L) illuminant ledit environnement (A),

   - la génération, en fonction de ladite information de réflectance (120a), desdits facteurs de forme (120b), et de ladite information d'intensité lumineuse et de position (120c), d'un modèle de radiosité dudit environnement (A),
   - la résolution (104) dudit modèle de radiosité pour produire des valeurs de radiosité de surfaces couvrant ledit environnement (A), et
   - le mappage (106) desdites valeurs de radiosité vers des valeurs d'illumination desdites surfaces couvrant ledit environnement (A),
   - l'extraction (10), à partir de ladite pluralité d'images, de valeurs d'émittance lumineuse capturée, $M_{(x,t)}$ ou $R_{(x,t)}$ ainsi que de valeurs d'albedo $\rho_{(x)}$ desdites surfaces couvrant l'environnement (A),
   - le calcul (10) de valeurs d'illumination $E_{(x,t)}$ desdites surfaces couvrant l'environnement (A) en fonction desdites valeurs d'émittance et desdites valeurs d'albedo $\rho_{(x)}$.

2. Le procédé de la revendication 1, comprenant :

   - le calcul (10), à partir de ladite pluralité d'images d'un environnement (A) illuminé (L), de valeurs de luminance mesurées $L_{(x,t)}$ desdites surfaces couvrant l'environnement (A),
   - la conversion des valeurs de luminance mesurées $L_{(x,t)}$ en valeurs d'émittance correspondantes desdites surfaces couvrant l'environnement (A).

3. Le procédé de la revendication 2, comprenant :

   - la mise en vecteur desdites valeurs d'émittance,
   - le calcul d'un vecteur des valeurs inversées des valeurs d'albedo acquises,
   - le calcul desdites valeurs d'illumination $E_{(x,t)}$ sous forme d'un produit scalaire de vecteurs dudit vecteur de valeurs d'émittance et dudit vecteur des valeurs inversées des valeurs d'albedo acquises.

4. Le procédé de la revendication 1, comprenant la résolution (104) dudit modèle de radiosité par résolution de la matrice de radiosité sur la base d'une estimation de radiosité avec contraintes.

5. Le procédé de la revendication 1 ou de la revendication 4, pris en combinaison avec la revendication 2, dans lequel la conversion des valeurs de luminance mesurées $L_{(x,t)}$ en valeurs d'émittance correspondantes comprend le remplacement desdites valeurs de luminance mesurées $L_{(x,t)}$ par lesdites valeurs de radiosité.

6. Le procédé de l'une des revendications 1, 4 ou 5, comprenant :

   - l'extraction, de ladite pluralité d'images comprenant une information de profondeur (12b) de l'environnement (A) illuminé (L), d'une information de visibilité représentative de la présence ou de l'absence d'une visibilité en ligne de vue entre des couples de surface couvrant ledit environnement (A) ; et
- l'inclusion de ladite information de visibilité dans ledit modèle de radiosité dudit environnement (A).

7. Un système d'éclairage comprenant :

- un ensemble de dispositifs d'éclairage (L) destinés à éclairer un environnement (A),
- une configuration de capture d'images (12) configurée pour capturer une pluralité d'images dudit environnement (A) illuminé (L), la configuration de capture d'images (12) comprenant un premier capteur d'image RVB (12a) configuré pour capturer une image, de préférence une image fisheye de l'environnement (A) illuminé (L), et un capteur de profondeur d'image (12b) sensible à une information de profondeur de l'environnement (A) illuminé (L), et
- une unité de traitement du signal (10), couplée à la configuration de capture d'images (12) et configurée pour :

  - (a) calculer (10) des valeurs d'illumination $E_{(x,t)}$ de surface couvrant l'environnement (A) avec le procédé de l'une des revendications 1 à 6, et
  - (b) coordonner le fonctionnement dudit ensemble de dispositif d'éclairage (L) en fonction des valeurs illuminées $E_{(x,t)}$ calculées.

8. Un produit de programme informatique, qui peut être chargé dans au moins une unité de traitement du signal (10) et qui comprend des parties de code logiciel pour mettre en œuvre les étapes du procédé de l'une des revendications 1 à 6, lorsqu'elles sont exécutées par l'unité de traitement du signal d'un système selon la revendication 7.

9. Utilisation du procédé de l'une des revendications 1 à 6 pour le calcul (10) de valeurs d'illumination $E_{(x,t)}$ de surfaces couvrant un environnement (A) pour la mise en service d'un éclairage de celui-ci,

10. Utilisation du procédé de l'une des revendications 1 à 6 pour le calcul (10) de valeurs d'illumination $E_{(x,t)}$ de surfaces couvrant un environnement (A) pour la gestion et l'ajustement de l'éclairage sur la base de normes d'éclairage ou de scénarios prédéfinis.

11. Utilisation du procédé de l'une des revendications 1 à 6 pour le calcul (10) de valeurs d'illumination $E_{(x,t)}$ de surfaces couvrant un environnement (A) pour l'application d'un éclairage intelligent et d'environnements de qualité pour le travail et le cadre de vie.

FIG. 1

FIG. 2

FIG. 4

EP 3 794 910 B1

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2016112430 A1
- WO IB2017056246 A

### Non-patent literature cited in the description

- **D. MAURER.** *Combining Shape from Shading and Stereo: A Joint Variational Method for Estimating Depth, Illumination and Albedo*
- *DIALux software,* 16 November 2017, https://www.dial.de/en/dialux
- *Relux software,* 16 November 2017, https://relux.com/en
- Fast and accurate view factor generation. **B. BECKERS et al.** FICUP, An International Conference on Urban Physics. September 2016
- Partition of the circle in cells of equal area and shape. **L. MASSET et al.** Technical report, Structural Dynamics Research Group, Aerospace and Mechanical Engineering Department, University of Liege. Institut de Mécanique et Genie Civil, 2011
- **M. CHANDRAKER et al.** On the duality of forward and inverse light transport. *IEEE Trans. Pattern Anal. Mach. Intell.,* October 2011, vol. 33 (10), 2122-2128
- Efficient intrinsic image decomposition for RGBD images. **JIAN SHI et al.** Proceedings of the 21st ACM Symposium on Virtual Reality Software and Technology (VRST '15). ACM, 17-25
- **SAMUEL BOIVIN ; STEVE MARSCHNER ; RAVI RAMAMOORTHI.** Fitting complex materials from a Single Image. *ACM SIGGRAPH,* 2002
- **S. BOIVIN ; JACQUES BLANC-TALON ; DAN POPESCU et al.** Advanced Computer Graphics and Vision Collaboration Techniques for Image-Based Rendering. *Imaging and Vision Systems: Assessment and Applications*